Europäisches Patentamt

European Patent Office

Office européen des brevets

(19)

(11) Publication number: **0 047 169**
**A2**

(12) **EUROPEAN PATENT APPLICATION**

(21) Application number: **81303980.7**

(22) Date of filing: **01.09.81**

(51) Int. Cl.³: **A 23 F 5/46**

(30) Priority: **02.09.80 US 183491**

(43) Date of publication of application:
**10.03.82 Bulletin 82/10**

(84) Designated Contracting States:
**BE DE FR GB IT NL**

(71) Applicant: **THE PROCTER & GAMBLE COMPANY**
**301 East Sixth Street**
**Cincinnati Ohio 45202(US)**

(72) Inventor: **Reade, Sally Willhite**
**5870 Cedaridge Dr.**
**Cincinnati Ohio 45239(US)**

(72) Inventor: **Parker, Russell Allen**
**1087 Flintlock Dr.**
**Cincinnati Ohio 45231(US)**

(72) Inventor: **Brown, Geo. David**
**1684 Mandarin Ct.**
**Cincinnati Ohio 45240(US)**

(72) Inventor: **Vogel, James Edward**
**2876 Mt. Airy Ave.**
**Cincinnati Ohio 45239(US)**

(74) Representative: **Gibson, Tony Nicholas et al,**
**Procter & Gamble (NTC) Limited Whitley Road**
**Longbenton Newcastle upon Tyne NE12 9TS(GB)**

(54) Single-serving packets of aromatized instant beverage and method of manufacture thereof.

(57) A single-serving packet of aromatized instant coffee comprises a sealed, substantially gas impervious package containing a predetermined quantity of soluble coffee having less than 0.4% by weight coffee oil thereon. The package further contains from 0.4 to 0.5% by weight aromatized coffee oil injected onto the inner surface of the package prior to addition of the coffee. The packet of coffee has improved initial aroma impact when opened while minimizing objectionable oily cups.

Croydon Printing Company Ltd.

# SINGLE-SERVING PACKETS OF AROMATIZED INSTANT BEVERAGE AND METHOD OF MANUFACTURE THEREOF·

## Technical Field

The present invention relates to soluble beverage products, in particular, a single-serving packet of aromatized instant coffee.

## Background Art

The aroma initially developed upon opening a container or package ·of a beverage product is extremely important to how that product is perceived by the consumer. For example, a container of vacuum roast and ground coffee develops an intense, good quality aroma upon the first opening of the can. Soluble beverage products such as instant coffee are usually extremely deficient in aroma impact due to processing. In particular, packets containing a single-serving of instant coffee have minimal initial aroma impact upon opening.

Several methods have been developed for increasing the aroma impact of soluble beverage products. For example, the aroma can be incorporated into the soluble beverage product during processing. The more typical method, especially for instant coffee, is to use an aromatized oil. For example, aromatized coffee oil can be plated or sprayed onto instant coffee. See U.S. Patent 3,077,405 to Clinton et al, issued February 2, 1963, where aromatized coffee oil is plated onto particles of instant coffee to form agglomerates which are subsequently packaged to form an aromatized instant coffee product. See also U.S. Patent 3,769,032 to Lubsen et al, issued October 30, 1973, which discloses aromatization of instant coffee with aromatized coffee oil by dropwise addition.

Addition of aromatized coffee oil to instant coffee to improve the aroma qualities thereof is usually satisfactory. To increase the aroma impact of the instant coffee, the normal practice is to increase the amount of aromatized oil added to the instant coffee. However, if too much aromatized oil is added to the instant coffee, a slick of oil will form on the top of the beverage in the cup. This oil slick problem is frequently referred to as a "oily cup" which is considered objectionable by many coffee consumers as to appearance and particularly as to taste of the beverage.

Several methods could be used for solving this oily cup problem. For example, the aromatized coffee oil could be impregnated into an inert carrier to serve as the aroma source. See European patent application No. 1460 to Pultinas, published April 18, 1979, which discloses an aromatizing article formed from a microporous cellulosic polymer substrate impregnated with aromatized coffee oil encased within an envelope having perforations to permit gradual passage of the aroma through the envelope. See also German application 2,411,323 to Hydrostatic Trading, published Sept. 18, 1975, which discloses coffee aroma stabilizers for insertion in special packs of coffee formed from an insert of paper, cardboard or similar material impregnated with liquid glyceride coffee aroma carriers. These impregnated carriers serve to keep the aromatized oil out of contact with the instant beverage product and are especially desirable where the container or package is opened a number of times.

However, single-serving packets of instant coffee require a strong aroma impact only upon the initial opening of the packet at which point all the coffee is poured out. An impregnated carrier as the aroma source for a single-serving packet would thus add a significant expense. Also, there would be the problem of preventing the impregnated carrier from coming out of the packet along with the coffee. Less expensive and easier ways for providing single-serving packets of aromatized instant coffee products are needed.

It is therefore an object of the present invention to provide single-serving packets of aromatized instant beverages such as instant coffee having improved initial aroma impact.

It is a further object of the present invention to provide aromatized instant coffee packets which do not form objectionable oily cups.

It is yet another object of the present invention to provide aromatized instant coffee packets which do not require impregnated carriers as the aroma source.

These and further objects of the present invention are hereinafter disclosed.

## Disclosure of the Invention

A. Summary of the Invention.

The present invention relates to a single-serving packet of aromatized instant beverage product. A sealed, substantially gas impervious package contains a predetermined quantity of a soluble beverage such as soluble coffee having less than 0.6% by weight edible oil thereon. The package further includes from 0.1% to 0.8% (by weight of the soluble beverage) of an aroma oil, typically an aromatized oil, applied to the inner surface of the sealed package. The total amount of aroma oil on the inner surface of the package and on the soluble beverage is usually at least 0.4% by weight. The aroma oil is first applied to the inner surface of the package. The predetermined quantity of soluble beverage is then added to the package. The package containing aroma oil and soluble beverage is then sealed to provide the aromatized instant beverage packet.

It has been found that a level of about 0.6% by weight aroma oil such as aromatized coffee oil on instant coffee will tend to form an objectionable oily cup as to appearance and particularly as to taste of the beverage. The level of aroma oil on the coffee can be decreased to about 0.4% by weight so as not to form an oily cup but with a subsequent decrease in aroma impact. Application of the aroma oil to the inner surface of the package permits an increase in the amount of aroma oil above about 0.4% by weight with increased aroma impact without an objectionable oily cup being formed. For example, single-serving packets of aromatized instant coffee can contain 0.6% by weight coffee oil wherein 0.45% aromatized coffee oil is injected onto the inner surface of the packet with 0.15% coffee oil being on the soluble coffee. When the contents of the packet are added to water to form the coffee beverage, only about 0.4% by weight of the total amount of oil comes out along with the soluble coffee. Thus, the formation of an objectionable oily cup is avoided and the aroma impact of the single-serving packet increased.

B. Packages.

An important component of the present invention is the package which contains the aroma oil and soluble beverage. As used herein, the term "package" includes various containers such as bottles, jars, cans, pouches, bags, envelopes, and the like. Because of the aroma oil contained therein, the package should be substantially gas impervious when sealed. As used herein, the term "substantially gas impervious" means that the package prevents loss of aroma contained therein while at the same time preventing entry of oxygen which can cause staling of the aroma. The entire package can be made of substantially gas impervious material. However, only one layer of the package need be substantially gas impervious.

For bottles, jars and cans which are usually rigid or semi-rigid, the package can be formed from materials such as glass or metal which are substantially gas impervious. For pouches, bags and envelopes, it is usually preferable to form the package from more flexible materials. Suitable flexible materials include metallic films such as aluminum foil which is substantially gas impervious and polymeric and copolymeric films and blends thereof, including laminates. Suitable polymeric films include those made from polyethylene, polypropylene, polyvinylidene chloride and polyvinylchloride. Preferred polymeric films are those which are heat sealable as the inner layer to form the package. Because polymeric films are usually gas pervious, a substantially gas impervious layer is included in forming the package. For example, a suitable laminated package can be formed of an inner layer of heat sealable polymeric film such as polyethylene or polypropylene, a second layer of aluminum foil which is substantially gas impervious, a third layer of polymeric film and an outside layer of paper.

C.  Soluble beverages.

Another key component of the present invention is the soluble beverage. Soluble beverages useful in the present invention are those which are substantially water soluble so as to form an aqueous beverage when dissolved in water. The soluble beverage can be derived from natural fruit juice powders, synthetic beverage mixes or combinations thereof. For example, orange powders, lemonade powders, grape powders, tea powders, cocoa powders and the like, can be used in the present invention. Also, soluble beverages derived from roasted grains such as sprouted barley, rye, corn and chickory or mixtures thereof can be used.

The soluble beverage normally employed in the present invention is soluble coffee. The soluble coffee can be decaffeinated or nondecaffeinated and can be in the form of spray-dried particles, freeze-dried particles or combinations thereof. If desired, the soluble coffee particles can be agglomerated. See U.S. Patent 3,652,293 to Lombana et al, issued March 28, 1972, in particular Column 7, line 42, through Column 9, line 9 which describes methods for agglomerating soluble coffee particles. The coffee particles can also be formed into instant coffee flakes. See U.S. Patent 3,625,704 to Andre et al; issued ec. 7, 1971, which describes soluble coffee flakes formed by roll milling soluble coffee particles. The flaked soluble coffee typically forms from about 30 to 70% by weight of the total amount of soluble flakes.

The key feature of the present invention is to minimize the amount of edible oil, in particular aroma oil, on the soluble beverage. Soluble coffee containing 0.6% by weight coffee oil will form an objectionable oily cup when added to water. Soluble coffee containing no more than 0.4% by weight coffee oil is satisfactory as to oil level in the beverage. For soluble coffee containing flaked soluble coffee, coffee oil is typically included at up to 0.15% by weight of the total coffee.

D.   Aroma Oil.

An additional key component of the present invention is the aroma oil. As used herein, the term "aroma oil" refers to edible oils which naturally contain desirable aroma components or to which aroma components are added. The term "edible oils" normally refers to animal or vegetable triglycerides such as soybean oil, rapeseed oil, cottonseed oil, marine oils and lard. However, oils removed or expressed from other food products such as fruits can also be employed. A particularly preferred edible oil for instant coffee products of the present invention is coffee oil which naturally contains aroma components.

Typically, the edible oil is enriched with aroma components to form an aromatized oil, a preferred aroma oil in the present invention. For soluble coffee, a preferred aroma-enriched oil is aromatized coffee oil. Aroma components compatible with soluble beverages can be derived from a variety of sources. For example, desirable beverage aromas can be obtained from roasted beans, including coffee and cocoa, nuts such as peanuts, and fruits such as strawberries, oranges, grapes, lemons and the like. Synthetic beverage aromas can also be used in the present invention.

In the case of soluble coffee, coffee aroma is the preferred source for enriching the edible oil and can be derived from a variety of sources. For example, with regard to roast and ground coffee processing, coffee aroma can be obtained from gases evolved during roasting, grinding, flaking, bulk-handling and other processing steps. With regard to instant coffee processing, coffee aroma can be obtained during dry distillation or steam distillation of roast and ground coffee beans, including desorbate volatiles obtained from the process described in U.S. Patents 3,717,472, issued February 20, 1973, and 3,997,685, issued December 14, 1976 to Strobel, and U.S. Patent 4,100,305 to Gregg, issued July 11, 1978, or from extraction stripping condensate, stripped coffee oil or similar sources.

A preferred source of coffee aroma is grinder gas. As used herein, the term "grinder gas" is defined as those aroma and flavor volatiles liberated during and after the grinding of roasted coffee beans. Preferentially, the grinder gas is that gas drawn directly from the grinder but can include gas from such sources as flaking mills and coffee bins. This gas is preferred because it contains the richest and most intense source of those coffee aroma components perceived by the user as most desirable.

A number of methods can be used for enriching the edible oil with the desired beverage aroma. For example, coffee aroma is normally condensed as an aroma frost at cryogenic temperatures, such as by use of a scraped wall heat exchanger. See British Specification 1,339,700 to Patel et al, published Dec. 5, 1973, which discloses a method for forming coffee aroma frost by using scraped wall heat exchangers. The aroma frost formed is then added to the edible oil. See U.S. Patent 3,783,163 to Patel, issued January 1, 1974, which discloses a method for aromatizing edible oils by adding the oil to a cryogenic fluid to form a slurry, adding an aroma frost to the slurry, and then allowing the cryogenic fluid to evaporate, leaving behind a residue of aroma-enriched oil. The beverage aroma can also be directly condensed or added to the edible oil. See U.S. Patent 3,823,241 to Patel, issued July 9, 1975, wherein particulated edible oil cooled preferably to $-150^{O}F$ is placed in communication with roast and ground coffee under pressure conditions which transfer the aroma to the particulated oil.

E. Method for making packets of
aromatized beverage product.

Preformed packages can be used in the method of the present invention. For flexible materials, however, the package is typically formed just prior to addition of the aroma oil and soluble beverage. For example, a web of flexible packaging material can be folded lengthwise and side seals then formed. The folded web with side seals is then cut into individual packages. See U.S. Patent 3,700,388 to Johnson et al (assigned to Rexham Corp.), issued Oct. 24, 1972 and U.S. Patent 2,649,611 to Bartelt, issued Aug. 25, 1953 for machines and methods for forming individual packages from a web of flexible material.

In the method of the present invention, the aromatized oil is applied to the inner surface of the package before addition of the soluble beverage. By applying the aroma oil first, the aroma impact of the package when opened is increased. Methods for applying the aroma oil include coating, injecting, spraying or brushing the aroma oil on the inner surface of the package. A typical application method is to inject the aroma oil onto the inner surface of the package with an airless spray system. Suitable airless spray systems are those normally employed in paint spraying operations. See U.S. Patent 3,635,125 to Rosen et al (assigned to Nordson Corp.), issued Jan. 18, 1972, and U.S. Patent 3,827,339 to Rosen et al (assigned to Nordson Corp.), issued 1974, which disclose airless spray systems normally used to spray paint.

The amount of aroma oil applied to the surface o the package will depend on the amount of aromatization desired, the amount of aroma oil on the soluble coffee to be added to the package, etc. The key factor is to insure that the aroma oil applied to the inner surface of the package, together with any edible oil on the soluble beverage, does not cause formation of an objectionable oily cup when the package is opened and the contents poured out. Generally, the amount of aroma oil applied to the inner surface of the package can range from about 0.1 to 0.8% by weight of the soluble beverage. Typically, from 0.4 to 0.5% by weight aromatized coffee oil is injected onto the inner surface of the package when the soluble beverage is soluble coffee. Application of the aroma oil to the bottom of the inner surface of the package will also minimize the problem of oily cups when the package is opened and the contents therein poured out. For a strong initial aroma impact, the combined amount of aroma oil on the inner surface of the package and on the soluble beverage subsequently added is usually at least about 0.4% by weight and more typically at least about 0.6% by weight. Also, the amount of aroma oil on the inner surface of the package usually is greater than the amount of aroma oil on the soluble beverage.

After the aroma oil is added, the package is then filled with a predetermined quantity of the soluble beverage. As used herein, the term "predetermined quantity" refers to the amount of soluble beverage which is needed to form a single serving of the beverage when added to water. Typically, a single serving of soluble coffee is from about 1 to 3 g. A variety of fillers can be used in adding the soluble beverage to the package. See Figure 5 of U.S. Patent 3,619,975 to Johnson et al, issued Nov. 16, 1971 and Figure 6 of U.S. Patent 3,708,952 to Schulze et al (assigned to Rexham Corp.), issued Jan. 9, 1973, which disclose fillers for packaging beverage products. The auger-type shaft 37, shown in Figure 6 of the '952 patent, assists product flow during the filling operation. Where the soluble beverage is agglomerated, a smooth, tapered or straight shaft such as 67 shown in Figure 5 of the '975 patent is preferred to prevent breakup of the agglomerates. Instead, the filler can be vibrated to induce flow of the soluble beverage. After addition of aroma oil and soluble beverage, the package can then be sealed. If desired, a tearslit can be formed to make the packaged product easier to open.

It is preferred in the method of the present invention to conduct the aroma oil and soluble beverage addition steps and the package sealing step under inert gas conditions. Suitable inert gases which can be used for maintaining an inert gas atmosphere include carbon dioxide and nitrogen. The package is also preferbly sealed so as to contain an inert gas atmosphere.

A preferred method for forming the packet of aromatized beverage product is that disclosed in commonly assigned U.S. application Serial No. 183551 to Thundathil, entitled "A Packaged Aromatized Instant Beverage Product with Improved Aroma Impact" filed September 2nd 1980. In the method of the Thundathil application, the addition of the aroma oil and soluble beverage, as well as the sealing step, are conducted in a nonpolar inert gas atmosphere. The nonpolar inert gas atmosphere is used to keep the levels of oxygen and carbon dioxide to a minimum. As used herein, the term "nonpolar inert gas" refers to an inert gas which, when adsorbed onto the soluble beverage, remains unpolarized. Suitable nonpolar inert gases include the noble gases such as argon. Nitrogen is typically preferrred as a nonpolar inert gas due to expense and commercial availability.

In the method of the Thundathil application, the package is purged with a nonpolar inert gas prior to the addition of aroma oil and the soluble beverage. This purging step insures that the package has minimal levels of oxygen and carbon dioxide. After the purging step, the aroma oil is then added to the package. The soluble beverage is usually stripped, typically for at least about 30 minutes, with a nonpolar inert gas prior to addition to the package. This stripping step serves to reduce the level of oxygen and carbon dioxide adsorbed on or adhering to the soluble beverage. The stripped soluble beverage typically has adsorbed thereon less than 1% oxygen (by volume) and less than 0.05% carbon dioxide (by volume). Soluble coffee stripped with nitrogen can have an adsorbed oxygen level less than 0.5% and an adsorbed oxygen level less than 0.01%.

After addition of the aroma oil and soluble beverage in the method of the Thundathil application, the package can then be sealed. The sealing step is conducted such that the sealed package contains a nonpolar inert gas atmosphere having an oxygen level less than 1% and a carbon dioxide level less than 0.05%. However, oxygen levels less than 0.5% and carbon dioxide levels less than 0.01% can be obtained for instant coffee products. The minimal carbon dioxide level prevents adsorption of the aroma on the soluble beverage and thus increases the aroma impact of the packaged product when opened.

## Description of the Apparatus
## for the Method of the Present Invention

A typical apparatus for the method of the present invention is a Bartelt intermittent motion (IM Model No. 7) gas packager with a model D filler, manufactured by Rexham Corp. of Sarasota, Florida. This Bartelt machine is similar to that disclosed in U.S. Patent 4,700,388 to Johnson et al (assigned to Rexham Corp.), issued Oct. 24, 1972, as particularly shown in Figure 2. The apparatus for the method of the present invention will therefore be referred to in terms of Figure 2 of the '388 patent. Modifications according to the apparatus for the method of the present invention will be noted hereinafter.

The apparatus for the method of the present invention, with particular reference to Figure 2 of the '388 patent, includes a package forming section 37 and package filling section 39. In section 37, a web 30 of laminate film is drawn forward and folded along the bottom edge thereof to form side strips 49. This web 30 is drawn forward by co-acting rolls 66 and 67. The rotation of these co-acting rolls 66 and 67 is controlled by a photoelectric device (not shown) which senses marks on the strips 49. When the photoelectric device senses these marks, the rotation of rolls 66 and 67 is momentarily halted for a set length of time to permit various sealing and cutting operations to be performed on web 30.

As strips 49 are advanced forward, a pair of heated horizontal sealing bars (not shown) reciprocate into engagement with strips 49 in order to form a bottom seal.

After the bottom seal is formed and strips 49 further advanced by rolls 66 and 67, a pair of heated vertical sealing bars 50 reciprocate into engagement with strips 49 to form a side seal. After the bottom and side seals are formed, the lead edge of strip 49 is further advanced beyond rolls 66 and 67 and is cut by cutting station 55 along the side seals to form packages 32 having a pair of sealed edges. In package forming section 37, splitter blade 53 keeps the top edge of strips 49 spread apart as the bottom and side seals are formed.

Cutting station 55 is at the end of package forming section 37. At the point indicated by 56 which begins package-filling section 39, the package 32 is transferred to a pair of finger clips carried by endless conveyor 57 which grab an edge of the formed package and hold the package upright. A splitter blade somewhat shorter in length than 54 shown in Figure 2 of the '388 patent keeps the upper edges of the packages 32 spread open. In the apparatus for the method of the present invention, this splitter blade also has a channel communicating with an opening or orifice in the bottom of the blade. When the top of a package 32 is positioned beneath the opening in the splitter blade, a quantity of nitrogen gas at a pressure of from 5 to 25 psig is supplied through the channel and injected into the package. The injected nitrogen gas is primarily for the purpose of blowing open the package which until this time is in a substantially flat configuration. See U.S. Patent 3,708,952 to Schulze et al (assigned to Rexham Corp.), issued Jan. 9, 1973, in particular Figure 5, for splitter blades having channels formed therein through which nitrogen gas is supplied for opening flat packages. After the package is blown open with nitrogen gas, a splitter knife (not shown) at the end of the splitter blade is reciprocated in a downward fashion to further open the package and then retracted upwardly. The top of the opened package is then advanced by conveyor 57 beneath a nozzle (not shown). Nitrogen gas at a pressure of from about 5 to 25 psig is supplied to the nozzle and injected into the opened package. This injected nitrogen gas is primarily for the purpose of purging residual oxygen and carbon dioxide from the interior of the package.

After purging with nitrogen gas, the top of the package is then advanced by conveyor 57 to a position beneath a second nozzle (not shown). A reservoir of aromatized oil such as aromatized coffee oil is pumped to the second nozzle by a Model 25B airless spray system manufactured by Nordson Corp. of Amherst, Ohio. The aromatized oil passes through the second nozzle and then back to the reservoir so as to form a recirculating system. See U.S. Patent 3,635,125 to Rosen et al (assigned to Nordson Corp.), issued Jan. 18, 1972, for similar airless spray pump systems. When the top of the package is positioned beneath this second nozzle, a solenoid is energized. The second nozzle then opens and a predetermined quantity of aromatized oil at a pressure from about 350 to about 750 psig is injected into the package. The second nozzle is preferably aimed so that the oil is injected onto the bottom portion of the inner surface of the package.

After the aromatized oil is injected into the package, the top of the package is advanced to beneath filler 61 as shown in Figure 2 of the '388 patent. At this point, the package 32 is filled by filler 61 with a predetermined quantity of soluble beverage such as instant coffee. In the apparatus for the method of the present invention, the filler 61 is similar to that disclosed in U.S. Patent 3,708,952 to Schulze et al (assigned to Rexham Corp.), issued Jan. 9, 1973, as particularly shown in Figure 6. Instant coffee from a hopper 34 (a portion of which is shown in Figure 6) is supplied through outlet tube 39. The coffee in tube 60 falls onto a disk 41 which is rotated by a smooth, tapered shaft, rather than the auger-type shaft 37 shown in Figure 6, such that the coffee is thrown outwardly from the disk and into collector 35. The coffee in collector 35 is then discharged through spout 36 into the package.

To reduce the residual levels of oxygen and carbon dioxide adsorbed on the coffee, nitrogen gas is supplied through a hole or holes in supply hopper 34 at a rate of from 1 to 15 $ft^3$/min. This nitrogen gas circulates through the hopper so as to strip the coffee of residual oxygen and carbon dioxide.

After the package is filled with coffee, the top of the package is advanced by conveyor 57 to beneath a wiper blade (not shown) which rotates about a horizontal shaft. The two ends of the rotating wiper blade remove particles of coffee which may be present along the top edge of the package and which could create problems in forming the top seal. After the top edge of the package is wiped, the package is advanced between a pair of heated horizontal sealing bars 63 which reciprocate into engagement with the top edge of the package to form a top seal. After the top seal is formed, the package is further advanced between a similar pair of cooling bars 64 which harden the newly formed top seal. The sealed packages are then removed from the conveyor 57.

In the apparatus for the method of the present invention, a hood (not shown) encloses the apparatus shown in Figure 2 of the '388 patent from a point just before co-acting rolls 66 and 67 to a point just after cooling bars 64. Nitrogen is circulated through the hood to form an inert gas atmosphere. This inert gas atmosphere minimizes the level of oxygen and carbon dioxide.

0047169

CLAIMS

1.    A single-serving packet of aromatized instant beverage product, <u>characterised in that</u> it comprises a sealed, substantially gas impervious package which contains:

    (a)   a predetermined quantity of soluble beverage having less than 0.6% by weight edible oil thereon; and

    (b) . from 0.1 to 0.8%, by weight of said soluble beverage, of aroma oil applied to the inner surface of said sealed package.

2.    A packet according to Claim 1 wherein said aroma oil comprises aromatized oil.

3.    A packet according to either one of Claims 1 and 2 wherein said soluble beverage comprises soluble coffee.

4.    A packet according to Claim 3 wherein the amount of aroma oil on the inner surface of said sealed package is from 0.4 to 0.5% by weight.

5.    A packet according to either one of Claims 3 and 4 wherein the amount of edible oil on said soluble coffee is no more than 0.4% by weight.

6.    A packet according to any one of Claims 3-5 where said soluble coffee comprises from 30 to 70% by weight flaked soluble coffee having incorporated therein up to 0.15% by weight coffee oil.

7.    A packet according to any one of Claims 3-6 wherein the total amount of aroma oil on the inner surface of said sealed package and on said soluble coffee is at least 0.6% by weight.

8.    A packet according to Claim 6 wherein the amount of aroma oil on the inner surface of said sealed package is greater than the amount of aroma oil on said soluble coffee.

9.    A packet according to any one of Claims 3-8 wherein said sealed package contains an inert gas atmosphere.

0047169

10.    A method for forming a single-serving packet of aromatized instant beverage product, comprising the steps of:

(a)    applying aroma oil to the inner surface of a package which is substantially gas impervious when sealed in an amount of from 0.1 to 0.8% by weight of a predetermined quantity of soluble beverage;

(b)    adding a predetermined quantity of soluble beverage having less than 0.6% by weight edible oil thereon to the package after step (a); and

(c)    sealing the package after step (b).

11.    A method according to Claim 10 wherein the aroma oil comprises aromatized oil.

12.    A method according to either one of Claims 10 and 11 wherein the soluble beverage comprises soluble coffee.

13.    A method according to Claim 12 wherein the amount of aromatized coffee oil injected in step (a) is from 0.4 to 0.5% by weight.

14.    A method according to any one of Claims 10-13 wherein steps (a) to (c) are conducted in an inert gas atmosphere.